# FASCICULE DE BREVET EUROPEEN

(11) **EP 1 481 339 B1**
(45) Date de publication et mention de la délivrance du brevet: **22.07.2009**
(21) Numéro de dépôt: 03722670.1
(22) Date de dépôt: 21.02.2003
(51) Int. Cl.: G06F 17/30

(54) **PROCEDE ET DISPOSITIF DE TRAITEMENT INFORMATIQUE D'UN CONTENU AUDIOVISUEL AVEC SOUS-TITRES**
VERFAHREN UND GERÄT ZUR DIGITALEN VERARBEITUNG VON AUDIOVIDEO-INHALT MIT UNTERTITELN
METHOD AND DEVICE FOR COMPUTER PROCESSING OF AUDIO-VISUAL CONTENT WITH SUBTITLES

(30) Priorité: 01.03.2002 FR 0202673
(43) Date de publication de la demande: 01.12.2004
(73) Titulaire: FRANCE TELECOM, 75015 Paris (FR)
(72) Inventeur: MAUPEU, Laurent, F-22300 Tredrez (FR); PLU, Michel, F-22300 Lannion (FR)
(86) Numéro de dépôt international: PCT/FR2003/000599
(87) Numéro de publication internationale: WO 2003/075175

(56) Documents cités:
- WO-A-02/05542
- US-A- 5 543 851
- US-A1- 2001 003 214
- SHAHRARAY B ET AL: "Pictorial transcripts: multimedia processing applied to digital library creation" IEEE WORKSHOP ON MULTIMEDIA SIGNAL PROCESSING. PROCEEDINGS OF SIGNAL PROCESSING SOCIETY WORKSHOP ON MULTIMEDIA SIGNAL PROCESSING, XX, XX, 23 juin 1997 (1997-06-23), pages 581-586, XP002153593

## Description

La présente invention concerne le traitement informatique d'un contenu audiovisuel numérique comprenant de la vidéo et des sous-titres.

L'invention vise en particulier le traitement de documents audiovisuels sous-titrés afin d'en permettre la lecture interactive avec un utilisateur au travers d'outils informatiques existants, dans le but de faciliter l'apprentissage des langues étrangères.

Il existe actuellement des outils informatiques d'édition de contenus audiovisuels permettant la création de cours multimédias intégrant de la vidéo. Ces outils permettent le déclenchement d'évènements au cours de la lecture d'un tel contenu. Ils permettent par exemple d'indexer les différentes séquences d'une vidéo, de façon à créer un menu, similaire aux menus que l'on trouve dans les vidéodisques numériques (DVD), grâce auquel on peut accéder directement à différentes parties de la vidéo.

De tels outils sont proposés, par exemple, par la société Oratrix sous le nom de GriNS™, ou bien par la société Microsoft sous le nom de *Windows Media Advanced Script Indexer*™ qui fait partie de l'environnement *Windows Media 7 Resource*™.

Dans le cas de la vidéo sous-titrée, les outils tels que ceux cités ci-dessus permettent de placer des liens dans le sous-titrage qui fourniront soit un accès à une page Web via un navigateur Web, soit une commande sur la vidéo (du type lecture, pause, stop, ou positionnement à un endroit précis), ou encore qui permettront de déclencher un événement dans un navigateur Web.

Cependant, tous les outils informatiques tels que ceux cités en exemple ne sont que des "boîtes à outils" permettant à un utilisateur averti d'intégrer "manuellement" des fonctionnalités interactives à des documents multimédias.

Par ailleurs, il existe sur le marché des outils informatiques permettant de séparer automatiquement les sous-titres de la vidéo, à partir d'un contenu audiovisuel numérique, de manière à en permettre le traitement séparé ultérieur. Un tel outil est fourni, par exemple, par la société Softni sous le nom de *Softni Caption Retriever*™.

Le document brevet WO0205542 décrit un procédé et un système pour insérer un contenu interactif dans un signal TV à partir des sous-titres contenus dans le signal. Selon ce document, les sous-titres sont traités par un décodeur puis comparés avec un index de termes ou de phrases, et selon le résultat de la comparaison, des données ITV (*Interactive Television*) sont obtenues puis encodées avec le signal TV, avant sa diffusion.

Cependant, en ce qui concerne les contenus audiovisuels numériques sous-titrés, il n'existe actuellement aucun outil informatique permettant d'intégrer automatiquement dans ces contenus, des fonctionnalités de navigation interactive relatives aux sous-titres.

Il y a pourtant un réel besoin d'un tel outil informatique, qui, en alliant les nouvelles possibilités offertes par les technologies relatives à la vidéo numérique et la richesse des contenus audiovisuels existants - qu'ils soient diffusés sur les chaînes de télévision ou bien accessibles par l'Internet - permettrait la création automatique de fonctionnalités de navigation interactive relatives aux sous-titres. De telles fonctionnalités seraient en particulier très utiles comme outils d'aide à la compréhension des langues.

L'invention a pour objectif de répondre à ce besoin et donc de résoudre les inconvénients précités de l'art antérieur.

A cet effet, l'invention concerne selon un premier aspect, un procédé dé traitement informatique d'un contenu audiovisuel numérique comprenant de la vidéo et des sous-titres, tel que défini dans la revendication 1.

Le terme "hypermédia" doit être entendu comme désignant une extension de l'hypertexte à des données multimédias, permettant d'inclure des liens entre des éléments textuels, visuels et sonores.

Ainsi, grâce à ces dispositions, il est maintenant possible, à partir d'un contenu audiovisuel numérique, selon un processus automatique, d'incorporer à ce contenu audiovisuel des fonctionnalités de navigation interactive relatives aux sous-titres, qui sont intimement liées à la structure des sous-titres.

Selon un premier mode de réalisation, l'étape d'analyse de la structure des sous-titres inclut les sous-étapes suivantes :
(A1) - analyse des premières données de sous-titres afin de déterminer la structure des sous-titres selon au moins une unité prédéfinie de segmentation des sous-titres ;
(A2) - génération de secondes données de sous-titres incluant des informations de segmentation des sous-titres déterminées à l'étape (A1), les secondes données étant associées à des informations de synchronisation des sous-titres avec la vidéo.
   D'autre part, dans ce mode de réalisation, l'étape de génération de moyens informatiques de navigation hypermédia inclut la sous-étape de :
(A3) - génération, à partir des secondes données de sous-titres, de données de navigation dans les sous-titres, les données de navigation incluant, pour chaque unité de segmentation des sous-titres, une commande, interprétable par un lecteur informatique de contenus audiovisuels adapté, l'exécution de la commande par le lecteur informatique déclenchant la relecture de l'unité de segmentation des sous-titres, en synchronisation avec la séquence vidéo correspondante.

Grâce à ces dispositions, des fonctionnalités de navigation interactive dans les sous-titres sont automatiquement incorporées dans le contenu audiovisuel traité. Ces fonctionnalités sont particulièrement avantageuses dans le cadre de l'enseignement des langues étrangères, puisqu'un utilisateur pourra à loisir réécouter une portion choisie des sous-titres en synchronisation avec la vidéo correspondante.

Selon un second mode de réalisation qui peut être combiné avec le premier mode de réalisation, l'étape d'analyse de la structure des sous-titres inclut les sous-étapes suivantes :
(B1) - analyse syntaxique et lexicale des sous-titres ;
(B2) - génération de données de décomposition analytique des sous-titres, les données de décomposition analytique incluant, pour chaque phrase identifiée de sous-titres, des informations de synchronisation avec la vidéo, et pour au moins une partie des mots constituant la phrase considérée, la forme lexicale de base de chaque mot.
   D'autre part, dans ce mode de réalisation, l'étape de génération de moyens informatiques de navigation hypermédia inclut les sous-étapes suivantes :
(B3) - détermination, à partir des données de décomposition analytique des sous-titres, pour chaque mot parmi au moins une partie des mots constituant les sous-titres, d'un lien informatique pointant sur une entrée lexicale d'un dictionnaire linguistique électronique, cette entrée lexicale du dictionnaire étant déterminée au moins en fonction de la forme lexicale de base du mot considéré ;
(B4) - génération de troisièmes données de sous-titres, incluant les sous-titres, les liens informatiques déterminés à l'étape (B3), et des informations de synchronisation des sous-titres avec la vidéo ; la lecture de ces troisièmes données par un lecteur informatique de contenus audiovisuels adapté, provoquant l'affichage des sous-titres avec possibilité de résolution de chaque lien informatique, afin de rechercher pour le mot considéré l'entrée lexicale correspondante du dictionnaire.

Grâce à ces dispositions, des fonctionnalités de navigation interactive, à partir des mots de sous-titres vers un dictionnaire en ligne, sont automatiquement incorporées dans le contenu audiovisuel traité. Ces fonctionnalités sont également particulièrement avantageuses dans le cadre de l'enseignement des langues étrangères puisqu'un utilisateur pourra, par exemple en cliquant sur un mot de sous-titres, obtenir à l'écran, en temps réel, la définition du mot dans un dictionnaire.

Selon une caractéristique préférée du second mode de réalisation, le lien informatique associé à un mot de sous-titre est une adresse Web (URL). D'autre part, une commande informatique relative à un mot affiché sur un écran d'ordinateur et exécutée par un utilisateur du lecteur informatique, par exemple via un dispositif informatique de pointage, provoque la lecture de l'adresse Web par un navigateur Web.

Selon une caractéristique particulière de l'invention, un contenu audiovisuel traité selon l'invention est stocké dans un format de lecture en flux continu (*streaming*).

Ainsi, un contenu audiovisuel traité selon l'invention est particulièrement adapté à une utilisation au travers du réseau Internet, au moyen d'outils multimédias liés à l'internet.

Selon un second aspect, l'invention concerne un système informatique, comportant des moyens informatiques adaptés à la mise en oeuvre d'un procédé de traitement d'un contenu audiovisuel tel que succinctement exposé supra.

L'invention concerne encore un programme d'ordinateur sur un support d'informations, ce programme comportant des instructions de programme adaptées à la mise en oeuvre d'un procédé de traitement d'un contenu audiovisuel, lorsque ce programme est chargé et exécuté dans un ordinateur

Les avantages de ce système informatique et de ce programme d'ordinateur, sont identiques à ceux du procédé de traitement d'un contenu audiovisuel, tels que brièvement exposés supra.

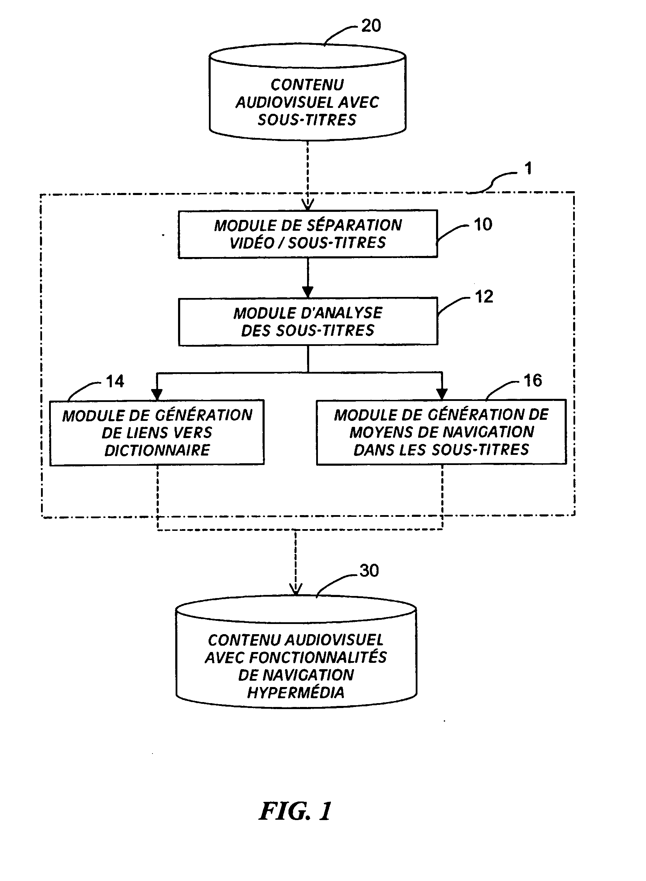

D'autres particularités et avantages de l'invention apparaîtront encore dans la description ci-après de modes préférés de réalisation, décrits à l'appui des dessins annexés, sur lesquels :
- là figure 1 est un bloc-diagramme d'un système informatique de traitement d'un contenu audiovisuel numérique, selon l'invention ;
- la figure 2 est un organigramme illustrant le principe général d'un procédé de traitement informatique d'un contenu audiovisuel numérique, selon l'invention ;
- la figure 3 est un organigramme illustrant un procédé de traitement d'un contenu audiovisuel selon un mode de réalisation préféré de l'invention ;
- la figure 4 est un bloc-diagramme d'un ordinateur adapté pour la mise en oeuvre d'un procédé de traitement d'un contenu audiovisuel numérique selon l'invention.

En référence à la **figure 1****,** on va décrire un système informatique (1) de traitement d'un contenu audiovisuel numérique, selon l'invention.

Comme représenté à la figure 1, le système informatique 1 comporte un module 10 de séparation vidéo / sous-titres, destiné à extraire du contenu audiovisuel numérique 20 les sous-titres, associés à des informations de synchronisation des sous-titres avec la vidéo. On obtient alors en sortie du module 10 des données de sous-titres incluant les sous-titres et les informations de synchronisation précitées.

Selon le mode de réalisation préféré de l'invention, le module 10 est constitué par la plate-forme logicielle/matérielle connue sous le nom *Softni Caption Retriever*™ et commercialisée par la société Softni. On pourra se reporter à l'adresse Web : http://www.softni.com pour obtenir plus d'informations sur ce produit.

Le système 1 de traitement d'un contenu audiovisuel selon l'invention comporte en outre un module 12 d'analyse des sous-titres, destiné à analyser la structure des sous-titres à partir des données de sous-titres générées par le module de séparation 10.

Le système 1 comporte ensuite deux modules 14, 16 permettant de générer des moyens de navigation hypermédia adaptés à la structure des sous-titres analysée préalablement par le module d'analyse 12. Les modules 14, 16 incorporent ensuite ces moyens hypermédia au contenu audiovisuel initial de manière à constituer un contenu audiovisuel 30 qui possède des fonctionnalités de navigation hypermédia.

Le terme "hypermédia" doit être entendu ici comme désignant une extension de l'hypertexte à des données multimédias, permettant d'inclure des liens entre des éléments textuels, visuels et sonores.

Le module 14 est spécialisé dans la génération de liens informatiques entre au moins une partie des mots constituant les sous-titres et des entrées lexicales d'un dictionnaire linguistique électronique.

Le module 16 est quant à lui, spécialisé dans la génération de moyens de navigation interactive dans les sous-titres.

Dans le mode de réalisation préféré de l'invention, chacun des modules 10, 12, 14, 16 dont la réunion constitue un système informatique 1 de traitement d'un contenu audiovisuel selon l'invention, est principalement constitué de composants logiciels (c'est-à-dire des programmes d'ordinateur). Cependant, chacun de ces modules peut aussi inclure des moyens matériels, tels qu'une carte vidéo ou une carte décodeur de sous-titres, comme c'est le cas par exemple de la plate-forme *Softni Caption Retriever*™.

Par ailleurs, les différents modules (10, 12, 14, 16) composant le système informatique 1 selon l'invention, peuvent être répartis sur différents ordinateurs reliés à un réseau de communication, par exemple l'Internet.

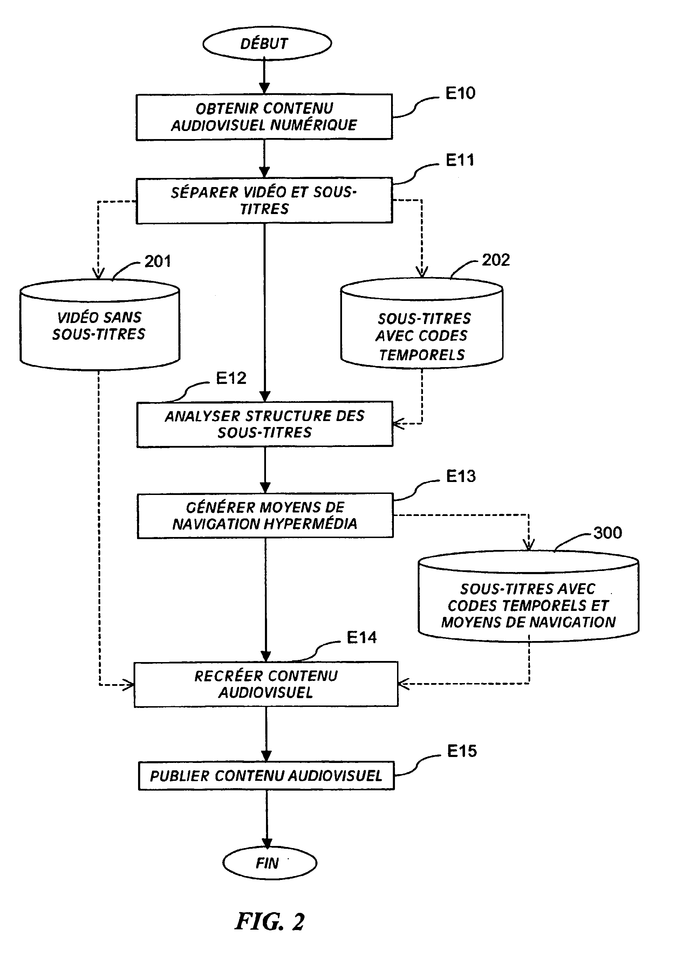

Le procédé de traitement d'un contenu audiovisuel mis en oeuvre par le système informatique 1 selon l'invention, va maintenant être décrit en liaison avec la figure 2.

En référence à la **figure 2****,** on va décrire le principe général d'un procédé de traitement informatique d'un contenu audiovisuel numérique, selon l'invention.

Comme illustré à la figure 2, le procédé de traitement d'un contenu audiovisuel selon l'invention, comporte une première étape E10 d'obtention d'un contenu audiovisuel numérique comportant de la vidéo et des sous-titres (*captions* en anglais). Il peut s'agir par exemple d'un film de cinéma en version originale sous-titrée dans la langue originale, destiné entre autres à être vu par des personnes sourdes ou malentendantes.

Ce contenu audiovisuel peut être par exemple obtenu à partir d'une source d'émissions télévisuelles diffusées par satellite. Dans ce cas, l'acquisition des émissions est effectuée par un boîtier décodeur (*set top box),* par exemple, un enregistreur de vidéos de type TiVo™ commercialisé par la société TiVo Inc., qui permet en particulier de programmer l'heure d'enregistrement des émissions.

Le contenu audiovisuel ainsi obtenu est alors enregistré, puis fourni à un système informatique, typiquement un micro-ordinateur (ou une station de travail), dans lequel il est numérisé.

Le contenu audiovisuel numérique ainsi obtenu subit alors un processus de séparation de la vidéo et des sous-titres dans le module (10) de séparation vidéo / sous-titres, comme illustré par l'étape E11.

Dans le cadre du mode de réalisation décrit, les processus de numérisation et de séparation vidéo / sous-titres, sont effectuées par une même plate-forme logicielle/matérielle, par exemple, la plate-forme *Softni Caption Retrievers*™.

Le traitement du contenu audiovisuel par un outil tel que la plate-forme *Softni Caption Retriever* permet la génération, dans un ou plusieurs fichiers, de données de sous-titres (202) associées à des informations de synchronisation des sous-titres avec la vidéo. Les informations de synchronisation dés sous-titres avec la vidéo, communément appelées "code temporel" (*time code* en anglais), sont extraites à partir de la source vidéo ou sont recréées sur la base de l'horloge de l'ordinateur sur lequel est installée la plate-forme.

Par ailleurs, à l'issue du traitement du contenu visuel par la plate-forme de séparation vidéo / sous-titres, des données vidéo sans sous-titres (201) sont obtenues. Ces données vidéo incluent les signaux audio associés aux signaux vidéo.

A l'étape suivante E12 (fig. 2), les données de sous-titres 202 sont fournies au module 12 d'analyse des sous-titres, qui en effectue l'analyse de la structure. Comme cela sera exposé plus loin dans la description, cette analyse peut comprendre une analyse de la structure des sous-titres vis-à-vis d'une unité de segmentation prédéfinie, par exemple une ligne d'affichage ou bien une phrase grammaticale.

Cette analyse peut aussi comprendre une analyse grammaticale et lexicale approfondie. Dans le mode de réalisation préféré de l'invention, les deux types d'analyse précités sont effectués.

A la suite de l'étape d'analyse des sous-titres, des moyens logiciels de navigation hypermédia sont générés, à l'étape E13, par les modules 14, 16 (fig. 1). Ces moyens de navigation sont spécifiquement adaptés à la structure analysée des sous-titres. On obtient alors des données 300 contenant les sous-titres, des codes temporels et les moyens de navigation hypermédia précités.

Selon le mode de réalisation préféré de l'invention ces moyens de navigation hypermédia incluent des moyens interactifs de navigation interne aux sous-titres, générés par le module 16, et des moyens de navigation externe aux sous-titres (liens informatiques vers un dictionnaire électronique), générés par le module 14.

Des données de sous-titres 300 incorporant ces moyens de navigation hypermédia et des informations de synchronisation avec la vidéo, sont alors générées. A l'étape E14, les informations de navigation hypermédia sont incorporées au contenu visuel initial en associant à nouveau les données vidéo sans sous-titres (201) et les nouvelles données de sous-titres (300).

Enfin, à l'étape E15, le contenu audiovisuel traité est publié, c'est-à-dire mis à disposition des utilisateurs, par exemple en étant déposé dans un ordinateur serveur de documents audiovisuels accessible via un réseau de communication tel que l'Internet.

Les fonctionnalités de navigation hypermédia incorporées dans le document audiovisuel pourront alors être mises en oeuvre lorsque le contenu visuel sera lu par un lecteur informatique apte à lire de tels documents. En pratique, de tels lecteurs informatiques sont connus sous l'expression "lecteur multimédia" (*media player*)*.*

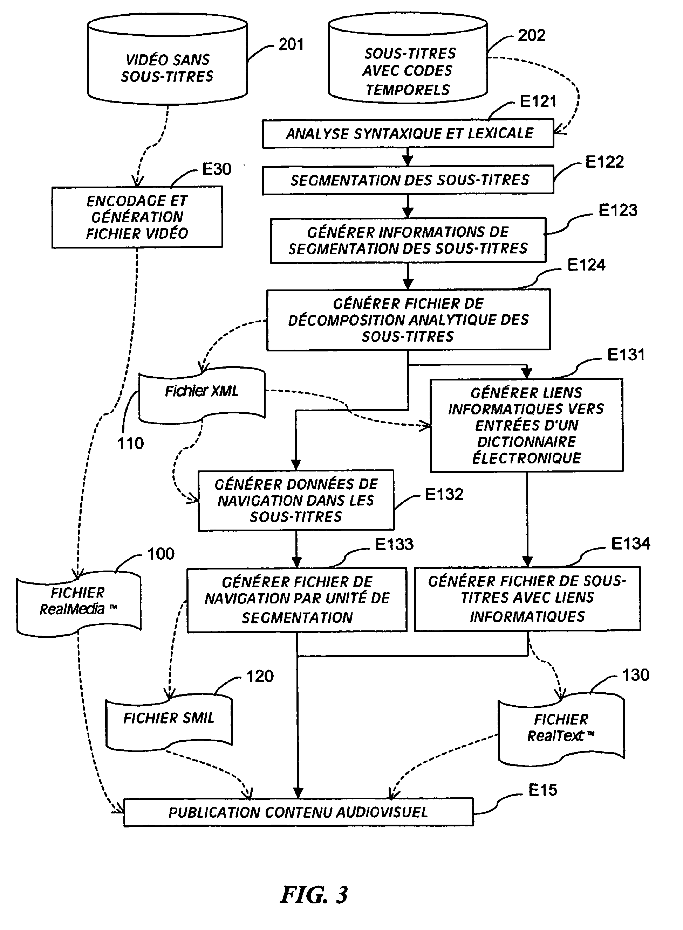

En liaison avec la **figure 3**, on va à présent décrire un mode de réalisation préféré du procédé de traitement d'un contenu audiovisuel selon l'invention.

A la figure 3, les données vidéo sans sous-titres 201 et les données de sous-titres 202 incluant des codes temporels, ont déjà été extraites du contenu visuel par le module 10 de séparation vidéo / sous-titres, et stockées dans des fichiers séparés.

En pratique, le module 10 est constitué de la plate-forme *Softni Caption Retriever*. Les données vidéo (images et son) sans-sous titres (201) sont alors obtenues dans un fichier au format AVI (*Audio Video Interlaced*).

Le format AVI est un format de fichier utilisé par le système d'exploitation Windows™ pour le stockage des images vidéo et du son, dans lequel les données vidéo alternent avec les données audio. Dans ce fichier AVI, la vidéo est codée au format VCR2 (codec vidéo connu).

Les données de sous-titres avec codes temporels (202) sont, quant à elles, stockées dans un fichier de type texte.

On donne ci-après, en exemple, une portion d'un fichier de sous-titres avec code temporels fournis par la plate-forme de séparation vidéo / sous-titres.

### Exemple 1 : Fichier de sous-titres avec codes temporels.

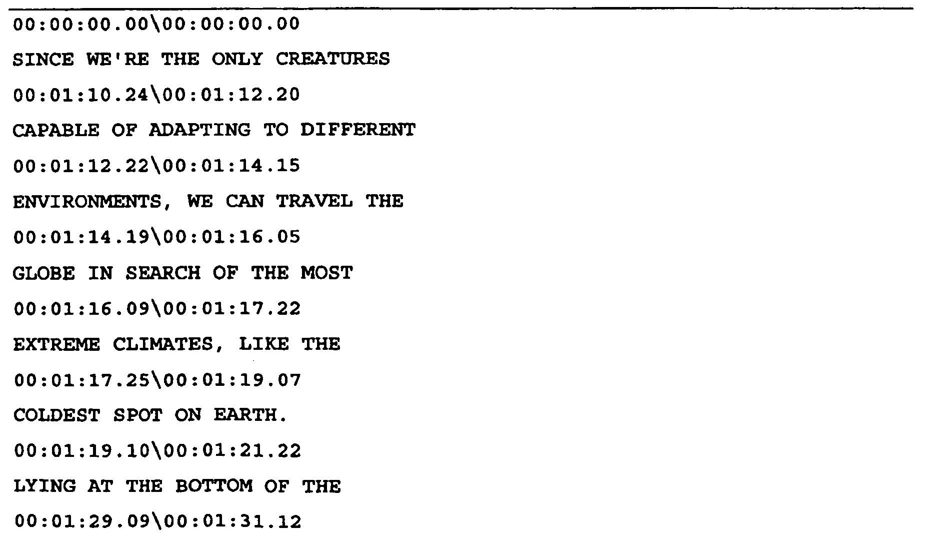

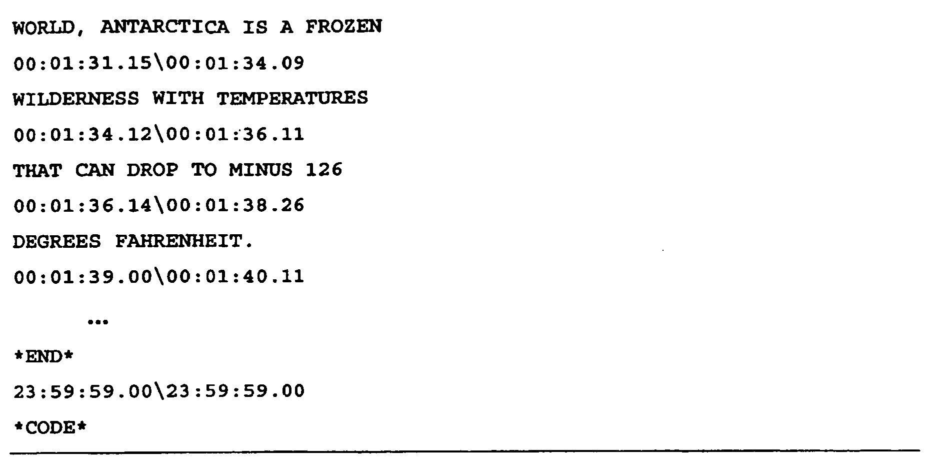

Comme on peut le voir dans le fichier donné en exemple ci-dessus, les sous-titres contenus dans le fichier, comporte deux phrases :
"*Since we're* ... *earth*" *et* "*Lying ... Fahrenheit*".

Chaque ligne de sous-titres (par ex. "*that can drop to minus 126*") correspond à une ligne d'affichage des sous-titres sur un écran de visualisation.

Chaque ligne de sous-titre est suivie d'un code temporel définissant le début et la fin de l'affichage de la ligne considérée, en synchronisation avec les images vidéo correspondantes. Ainsi l'affichage de la ligne de sous-titres "*Lying at the bottom of the*" débute à l'instant '00:01:29.09' après le commencement de la séquence vidéo, et se termine à l'instant '00:01:31.12'.

Conformément à l'invention, à l'étape E121, les données de sous-titres avec codes temporels 202 sont fournies en entrée au module 12 d'analyse des sous-titres pour y subir une analyse syntaxique et lexicale.

Dans le cadre de la présente invention, cette analyse syntaxique et lexicale a pour objectif de déterminer notamment :
- la structure de texte des sous-titres en phrases grammaticales, ce qui implique, par exemple, de pouvoir faire la distinction entre un point de fin de phrase et un point séparant deux caractères dans un sigle ;
- la forme lexicale de base pour tout ou partie des mots constituant chacune des phrases identifiées, cette forme lexicale de base est encore désignée par "racine" ou encore "lemme" du mot considéré ;
- la fonction de chaque mot dans une phrase donnée.

Ce type de composant logiciel permettant d'effectuer une telle analyse syntaxique et lexicale d'un texte, est connu de l'état de la technique.

Pour obtenir plus d'informations sur ce type d'outils, on pourra consulter le site Web de l'Association pour le Traitement Automatique des Langues (ATALA) à l'URL suivante : http://www.atala.org/ .

Dans le cadre de l'étape d'analyse syntaxique et lexicale, la première partie du traitement d'un texte (de sous-titres) consiste à identifier et typer les suites de caractères linguistiquement pertinentes de ce texte. Ces suites, appelées ici "segment", ne correspondent pas obligatoirement à des mots, il peut s'agir de nombres (par ex. : "-3,14"), ou de dates (par ex. "25/02/2002"), etc. Ces suites pertinentes diffèrent selon les langues, ainsi, par exemple, l'écriture des nombres et des dates varie en français et en anglais.

A l'étape suivante, E122, on procède à la détermination de la structure des sous-titres selon au moins une unité prédéfinie de segmentation des sous-titres.

Dans le cadre du mode de réalisation choisi et représenté, l'information de segmentation des sous-titres en phrases est déjà obtenu lors de l'étape (E121) d'analyse syntaxique des sous-titres. A l'étape E122, cette segmentation pourra alors porter sur une unité de segmentation correspondant à une ligne d'affichage des sous-titres, à un paragraphe de sous-titres, ou encore, à chaque mot de type, par exemple, "verbe" ou "nom".

A l'étape suivante E123, on génère des données de segmentation des sous-titres. Ces données incluent les informations de segmentation, obtenues aux étapes E121 et E122, associées à des informations de synchronisation des sous-titres avec la vidéo, basées sur les codes temporels initiaux. Les informations de segmentation seront utilisées plus loin dans le processus, pour la génération des données de navigation dans les sous-titres (étape E132).

A l'étape E124, on génère des données de décomposition analytique des sous-titres contenant les résultats de l'analyse syntaxique et lexicale qui ont été obtenus à l'étape E121. Ces données de décomposition analytique incluent, pour chaque phrase identifiée de sous-titres, des informations de synchronisation avec la vidéo basées sur les codes temporels initiaux, et pour au moins une partie des mots constituant la phrase considérée, la forme lexicale de base (lemme).

Dans le mode de réalisation préféré décrit ici, les données de segmentation des sous-titres sont incluses dans les données de décomposition analytique des sous-titres. A l'étape E124, les données de décomposition analytique des sous-titres sont stockées dans un fichier informatique 110.

Dans le mode de réalisation préféré de l'invention, le fichier 110 de décomposition analytique des sous-titres est un fichier dont le contenu est exprimé dans le langage de balisage connu XML (*eXtended Markup Language*).

On donne ci-après un extrait d'un fichier XML de décomposition analytique des sous-titres, obtenu à partir du fichier de sous-titres de l'Exemple 1 donné plus haut.

### Exemple 2 : Fichier XML de décomposition analytique des sous-titres.

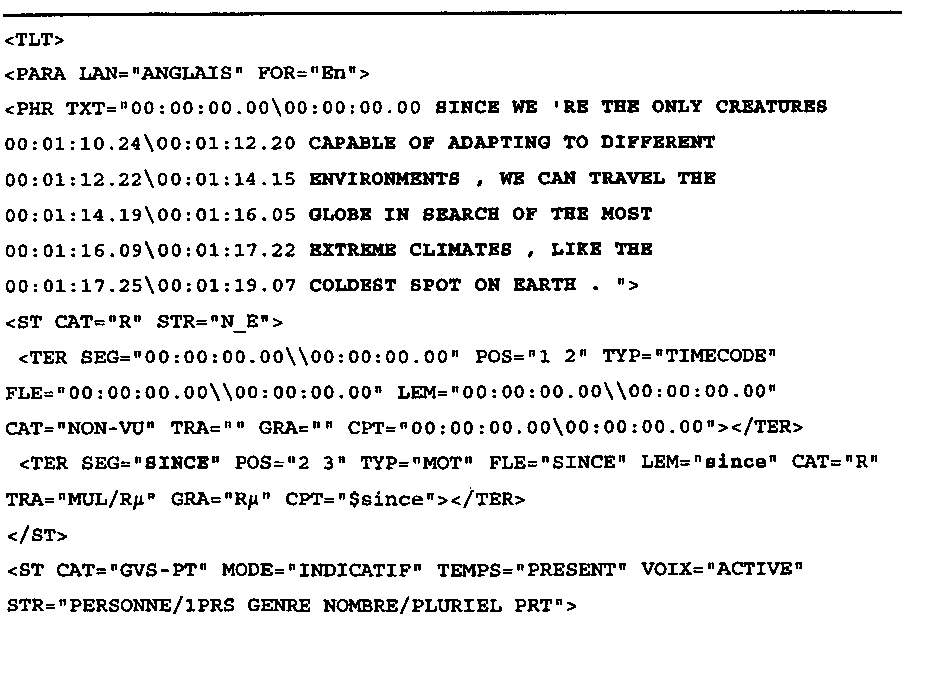

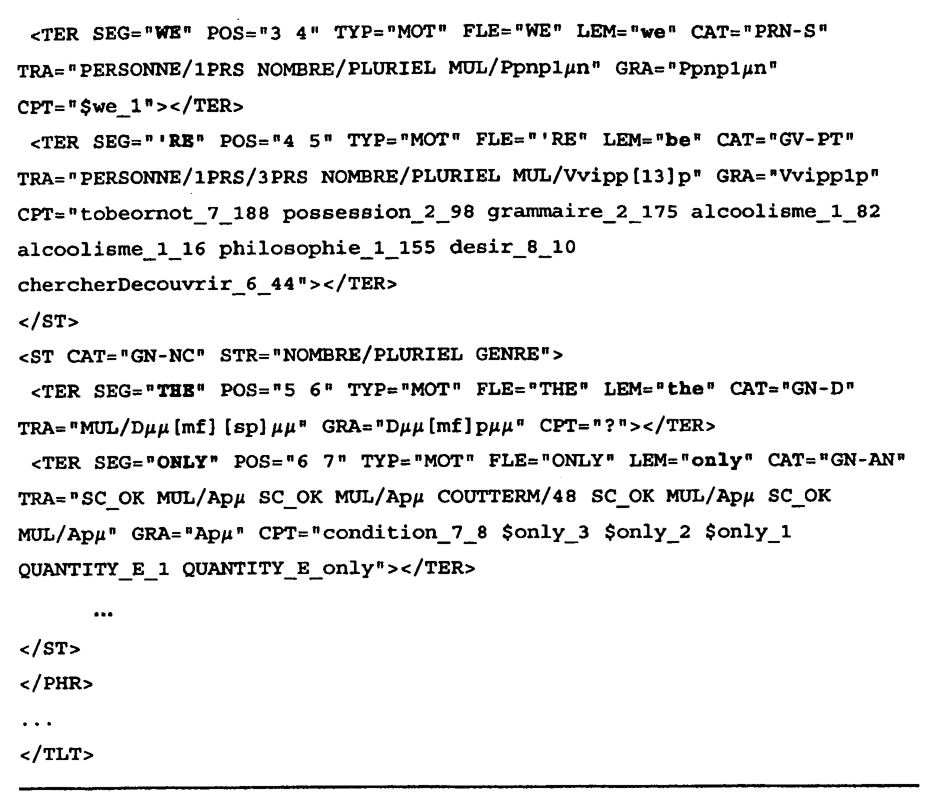

Comme on peut le voir dans l'Exemple 2 ci-dessus, dans le fichier XML de décomposition des sous-titres, on retrouve chacune des phrases du texte initial des sous-titres avec les codes temporels correspondants, regroupés dans la balise <*PHR TXT="...* ">.

Ensuite, à chaque segment élémentaire de sous-titres, qu'il corresponde à un mot (par ex. "*only*") ou non (par ex, un code temporel "*00:00:00.00\\00:00:00.00*"), correspond des données de décomposition analytique qui sont contenues dans une balise de segment : <*TER SEG*=... >.

Dans chacune des balises de segment, le champ défini par : *LEM="...",* contient le lemme du segment considéré, si ce segment est un mot.

Ainsi par exemple, dans la balise : <*TER SEG="ONLY"*...>, de l'Exemple 2, qui correspond au mot "*ONLY*", le lemme correspondant est "*only*".

De retour à la figure 3, le fichier XML 110 est fourni en entrée, d'une part, au module 14 de génération de liens vers un dictionnaire, au moyen duquel sont exécutées les étapes E131 et E134, et d'autre part, au module 16 de génération de données de navigation dans les sous-titres, au moyen duquel sont exécutées les étapes E132 et E133.

A l'étape E131, on détermine, à partir des données de décomposition analytique des sous-titres, issues du fichier XML 110, pour chaque mot parmi au moins une partie des mots constituant les sous-titres, un lien informatique pointant sur une entrée lexicale d'un dictionnaire linguistique électronique.

Dans le mode de réalisation préféré de l'invention, le lien informatique associé à un mot de sous-titre est une adresse Web (URL).

Le module 14 de génération de liens vers un dictionnaire, est en pratique un programme d'analyse (*parser* en anglais) d'un fichier XML. Ce programme effectue un traitement ligne par ligne des sous-titres contenus dans le fichier XML 110. Pour chaque ligne de sous-titre, à l'intérieur du fichier XML, le code temporel associé est extrait, puis pour chaque mot de la ligne de sous-titres considérée, on extrait la forme lexicale de base (lemme).

Ensuite, l'entrée lexicale de base du mot est concaténée, de manière appropriée, avec l'adresse Web prédéfinie d'un dictionnaire linguistique en ligne correspondant à la langue utilisée (ici l'anglais) dans les sous-titres. Cette "concaténation" pour le mot de sous-titres considéré, produit ainsi le lien informatique correspondant à ce mot, pointant sur l'entrée lexicale appropriée du dictionnaire en ligne.

L'entrée lexicale du dictionnaire appropriée pour un mot donné est, par conséquent, déterminée au moins en fonction de la forme lexicale de base du mot considéré.

Cependant, dans le mode de réalisation préféré de l'invention, l'entrée lexicale du dictionnaire est déterminée en outre en fonction de la catégorie grammaticale d'appartenance du mot. Cette information de catégorie grammaticale (verbe, nom, adjectif etc.) est disponible dans le fichier XML 110, pour chaque mot de sous-titres. De cette façon, la détermination de l'entrée lexicale appropriée du dictionnaire est rendue plus précise.

Dans l'Exemple 2 du fichier XML exposé plus haut, un lien vers l'entrée lexicale appropriée d'un dictionnaire en ligne, pour le mot "*on*/*y*", est par exemple l'URL suivante.

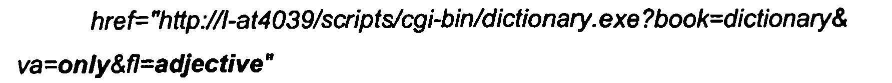

Dans cette URL, '*va=only*' précise la racine (lemme) du mot "*only*"*,* et '*fl=adjective*' précise sa catégorie grammaticale (adjectif).

Ainsi, lorsque le contenu audiovisuel issu du traitement selon l'invention sera lu par un lecteur multimédia, cette URL - qui constitue ainsi une commande informatique relative au mot de sous-titre affiché sur un écran d'ordinateur - pourra être exécutée par le lecteur multimédia.

La résolution du lien informatique, c'est-à-dire l'exécution de l'URL, pourra être déclenchée par un utilisateur humain du lecteur multimédia, par exemple en cliquant avec une souris sur le mot considéré. Un navigateur Web sera alors automatiquement lancé, qui chargera et affichera le contenu de l'adresse URL, c'est-à-dire la définition du dictionnaire correspondante au mot.

De retour à la figure 3, à l'étape E134, le module 14 de génération de liens vers un dictionnaire, génère un fichier de sous-titres 130 contenant les sous-titres, les codes temporels correspondants, et les liens informatiques (adresse Web - URL) correspondant aux mots des sous-titres pour lesquels des liens ont été créés à l'étape précédente (E131).

Dans le mode de réalisation préféré de l'invention, le fichier de sous-titres 130 est un fichier dont le format est adapté à la lecture en flux continu (*streaming* en anglais) des sous-titres avec la vidéo correspondante.

En pratique, le format utilisé est le format RealText™. Le format RealText est le format de texte adapté à la lecture en flux continu proposé par la société Real Networks.

La lecture en flux continu (parfois désignée par "lecture en transit") est une technique de lecture de fichier multimédia permettant à un utilisateur d'Internet (intemaute) de lire le fichier en temps réel, sans avoir à attendre son téléchargement complet.

De même, dans le mode de réalisation préféré de l'invention, les données vidéo (201) sans sous-titres, fournies par le module (10) de séparation vidéo / sous-titres sont ensuite encodées (étape E30) dans un format de lecture vidéo en flux continu (*streaming*) et stockées dans un fichier informatique 100.

En pratique, le format utilisé de lecture vidéo en flux continu est le format RealMedia^{™} développé par la société Real Networks.

La lecture simultanée du fichier vidéo RealMedia 100 et du fichier RealText 130, par un lecteur informatique de contenu multimédia (*streaming media player*), tel que le lecteur RealPlayer^{™} développé par la société Real Networks permet alors d'afficher de manière synchronisée, sur un écran d'ordinateur, la vidéo et les sous-titres.

On donne ci-après un extrait d'un fichier RealText^{™} 130, obtenu à partir du fichier XML 110 de l'Exemple 2 donné plus haut.

### Exemple 3 : Fichier RealText^{™} de sous-titres avec liens vers un dictionnaire.

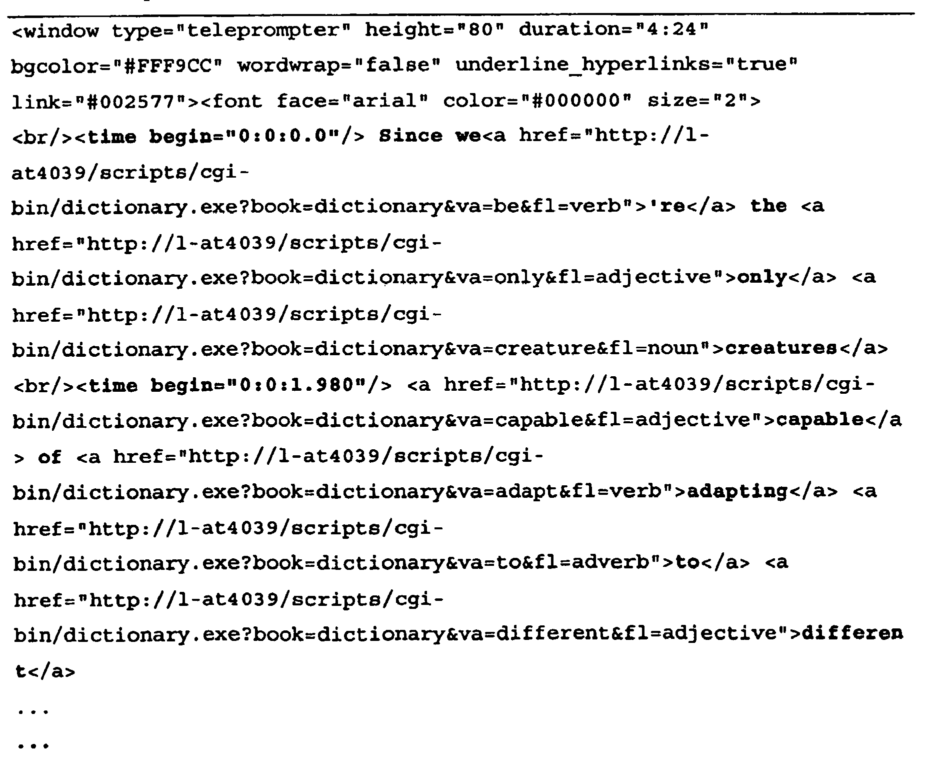

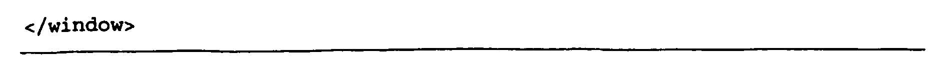

Comme on peut le voir dans l'Exemple 3 ci-dessus, un fichier RealText (130) selon l'invention, comporte :
- les sous-titres (par ex. les mots "*Since we*"),
- des informations de synchronisation des sous-titres avec la vidéo, présentes dans chaque balise : <*time begin="* ">, et correspondant chacune à l'instant d'affichage d'une ligne de sous-titres, et
- un lien (URL) vers une entrée d'un dictionnaire en ligne pour certains mots des sous-titres, codé dans la balise <a *href="..."* > qui précède le mot correspondant de sous-titre.

De retour à la figure 3, à L'étape E132, on génère, à partir des données de segmentation des sous-titres contenues dans le fichier XML (110), des données de navigation dans les sous-titres. Ces données de navigation incluent, pour chaque unité de segmentation considérée de sous-titres, une commande informatique, interprétable par un lecteur informatique multimédia, et dont l'exécution déclenche la relecture de l'unité de segmentation considérée en synchronisation avec la séquence vidéo correspondante.

Dans le mode de réalisation préféré de l'invention, les données de navigation dans les sous-titres sont stockées dans un fichier informatique 120, dans lequel ces données sont exprimées dans le langage de balisage SMIL (*Synchronized Multimedia Integration Language*).

Le langage SMIL est un langage de balisage permettant de synchroniser des fichiers de nature différente pour en faire des objets multimédias aptes à être intégrés dans une page Web.

Le langage SMIL a été développé par le groupe de travail SYMM. Sa syntaxe et sa présentation reprennent celles du langage HTML. Il permet de définir les différentes caractéristiques de gestion du fichier multimédia.

Dans le mode de réalisation préféré de l'invention, le fichier SMIL 120, qui contient les données de navigation dans les sous-titres, inclut en outre une référence informatique au fichier vidéo RealMedia 100 et au fichier de sous-titres ReatText 130.

De cette façon, la lecture du fichier SMIL 120 par un lecteur de contenu multimédia, tel que le lecteur RealPlayer, provoquera l'affichage synchronisé de la vidéo et des sous-titres.

On donne ci-après un extrait d'un fichier SMIL 120, obtenu à partir du fichier XML 110 de l'Exemple 2 donné plus haut.

### Exemple 3 : Fichier SMIL de navigation dans les sous-titres.

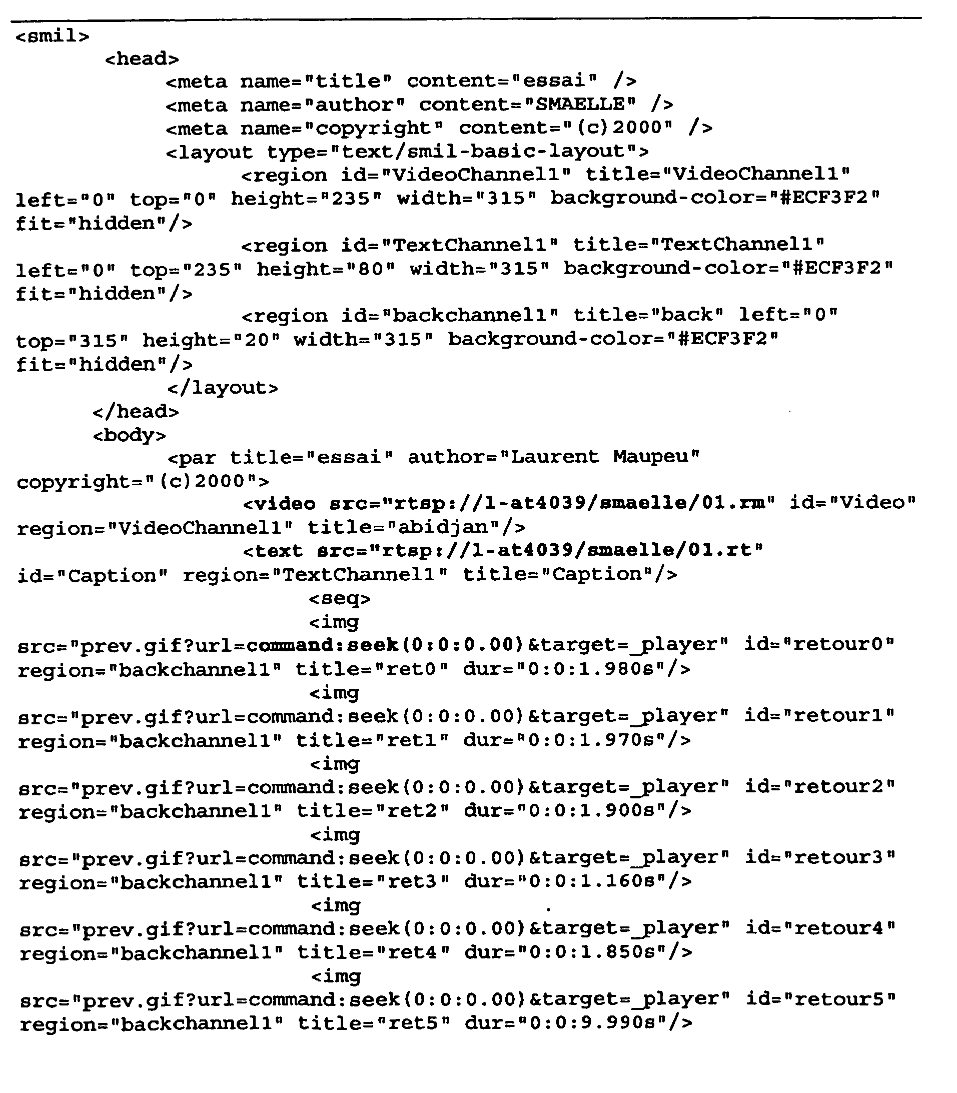

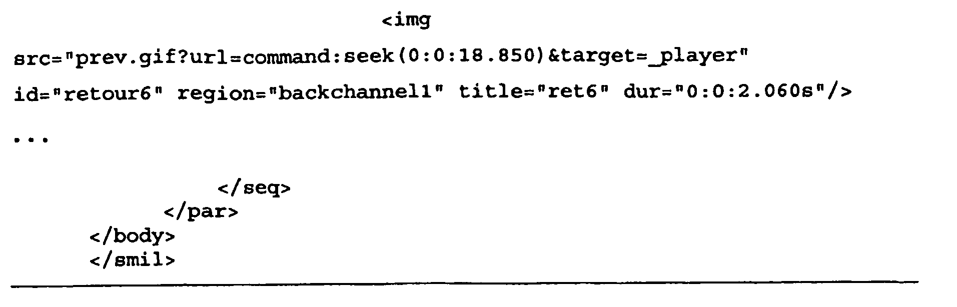

Comme on peut le voir dans l'Exemple 3 de fichier SMIL ci-dessus, le fichier vidéo RealMedia 100 et le fichier de sous-titres RealText 130 sont référencés dans le fichier SMIL dans les balises respectives : <*video src=*"..." ... /> et <*text src="..."* .../>. "rtsp" désigne dans cet exemple le protocole de *streaming* utilisé.

D'autre part, dans le mode de réalisation décrit ici, il existe dans ce fichier SMIL, une commande informatique exécutable pendant la durée d'affichage d'une ligne de sous-titres, et dont l'exécution déclenche la relecture des sous-titres depuis le début de la phrase dans laquelle s'inscrit la ligne de sous-titres considérée. Ainsi, dans le mode de réalisation décrit, l'unité de segmentation considérée pour la navigation interactive dans les sous-titres correspond à une phrase de sous-titres. Cependant, on peut prévoir de déclencher la relecture selon une unité différente de segmentation des sous-titres, par exemple, un mot, une ligne ou un paragraphe de sous-titres.

Dans le fichier SMIL donné en exemple ci-dessus, pour chaque ligne de sous-titres, il existe une commande codée selon la syntaxe *command:seek(Td)* où Td désigne l'instant d'affichage du début de la phrase de sous-titres.

Ainsi l'instruction suivante, extraite du fichier SMIL ci-dessus,
<*img*
*src="prev.gif?url=command:seek(0:0:0.00)&target=_player" id="retour0" region="backchannel1" title="ret0" dur="0:0:1.980s"*/>
est applicable à la première ligne d'affichage de durée : *dur="0:0:1.980s"* à partir de l'instant initial d'affichage des sous-titres : "*0:0:0.00*", qui correspond aussi à l'instant de début d'affichage de la première phrase des sous-titres, en synchronisation avec la vidéo correspondante.

Par conséquent, l'exécution de la commande *command:seek(0:0:0.00*) qui est applicable pendant toute la durée (*dur="0:0:1.980s*") d'affichage de la ligne de sous-titres en cours, déclenche la relecture des sous-titres à partir de l'instant '*0:0:0.00*', c'est-à-dire à partir du début de la première phrase de sous-titres.

Lorsque le fichier SMIL est lu par un lecteur de contenu multimédia, chacune des commandes de relecture est matérialisée sur l'interface utilisateur du lecteur pendant l'affichage de la ligne de sous-titres en cours, par exemple par un bouton sur lequel pourra cliquer un utilisateur pour déclencher le ré-affichage de la phrase de sous-titres contenant la ligne en cours, en synchronisation avec les données audio et vidéo correspondantes.

Toujours à la figure 3, à l'étape E15, il est procédé à la publication du contenu visuel exprimé dans un format de lecture en flux continu (*streaming*).

En pratique, les trois fichiers : Realtext 130, RealMedia 100 et SMIL 120, sont stockés dans un même répertoire d'un ordinateur serveur connecté à l'Internet où ils pourront être accédés par des postes utilisateurs connectés à Internet, par exemple au travers d'un site Web dédié à la fourniture de contenus audiovisuels.

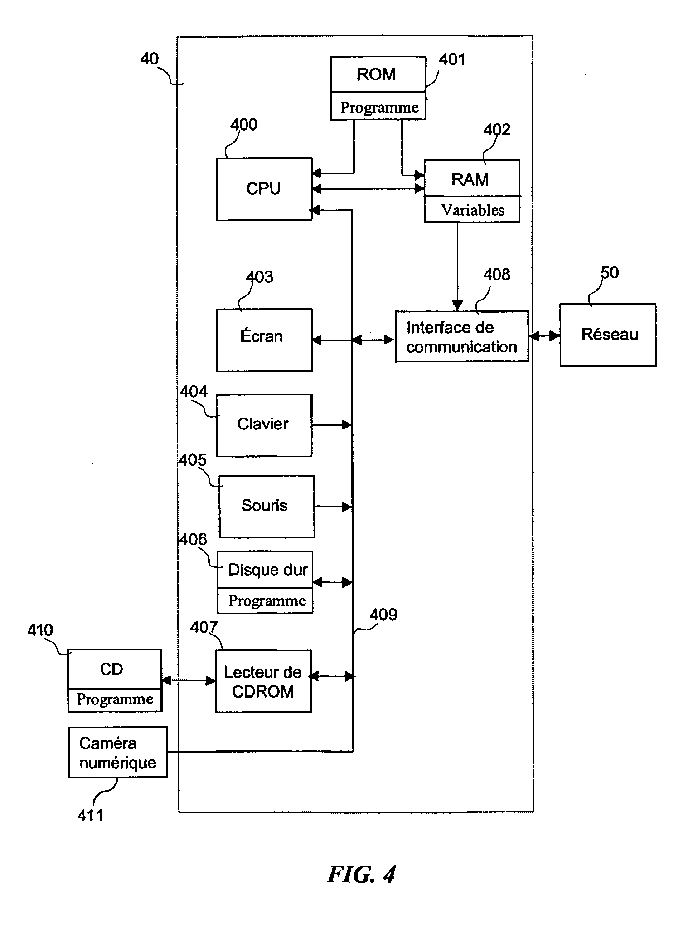

On va maintenant, en référence à la **figure 4**, décrire brièvement un ordinateur (40) adapté pour la mise en oeuvre d'un procédé de traitement d'un contenu audiovisuel numérique selon l'invention et décrit précédemment en liaison avec les figures 2 et 3. Il est à noter que l'ordinateur illustré à la figure 4 est un mode de réalisation particulier du système général décrit supra en relation avec la figure 1.

Dans ce mode de réalisation, le procédé de traitement d'un contenu audiovisuel selon l'invention est essentiellement mis en oeuvre par l'exécution de programmes d'ordinateur.

Dans la figure 4, l'ordinateur 40 qui peut être typiquement un micro-ordinateur ou une station de travail, est connecté à différents périphériques, par exemple une caméra numérique 411 ou tout autre dispositif d'acquisition ou de stockage de contenus audiovisuels, fournissant des informations (vidéos, sous-titrage) pour traitement à l'ordinateur 40. Ces contenus audiovisuels peuvent être stockées dans les moyens de stockage dont dispose l'ordinateur tels qu'un disque dur 406.

L'ordinateur 40 comporte également une interface de communication 408 reliée à un réseau de communication 50, par exemple l'Internet. Cette interface 408 est apte à recevoir du réseau 50 des documents audiovisuels à traiter selon le procédé de l'invention.

L'ordinateur 40 comporte des moyens de stockage de données tels que le disque dur 406, mais également un lecteur de disques compacts (CDROM) 407 sur lesquels peuvent être stockés des contenus audiovisuels.

Selon un mode préféré de réalisation de l'invention, le code exécutable des programmes permettant de mettre en oeuvre le procédé de traitement d'un contenu audiovisuel selon l'invention est mémorisé dans le disque dur 406. Selon une variante de réalisation, le code exécutable de ces programmes peut être stocké dans une mémoire ROM, 401, de l'ordinateur. Selon une autre variante de réalisation, ce code peut être stocké dans un disque compact (CD) 410.

Selon encore une autre variante de réalisation, le code exécutable du ou des programmes peut être téléchargé à partir du réseau de communication 50 via l'interface de communication 408 pour être mémorisé sur le disque dur 406.

L'ordinateur 40 comporte en outre un écran 403 permettant de visualiser les contenus visuels à traiter et servir d'interface graphique avec un utilisateur pour tester les contenus audiovisuels traités selon l'invention, à l'aide d'un dispositif de pointage tel qu'une souris 405, et d'un clavier 404.

L'ordinateur comporte bien sûr une unité centrale de traitement (CPU) 400, par exemple un microprocesseur, qui commande et dirige l'exécution des instructions du (ou des) programme(s) de l'invention, stockées dans la mémoire ROM 401, dans le disque dur 406 ou dans un disque compact 410.

L'ordinateur comporte également une mémoire RAM 402 comportant des registres destinés à mémoriser notamment les variables créées et modifiées pendant l'exécution du ou des programmes selon l'invention.

Enfin, l'ordinateur 40 comporte classiquement un bus de communication 409 pour permettre la communication et l'interopérabilité entre les différentes unités précitées composant l'ordinateur.

En résumé, l'invention décrite ici concerne un procédé et un dispositif de traitement informatique d'un contenu audiovisuel numérique comprenant de la vidéo et des sous-titres. Selon une implémentation préférée, les étapes du procédé sont déterminées par les instructions d'un programme de traitement de contenu audiovisuel selon l'invention, et le procédé est mis en oeuvre lorsque ce programme est chargé dans un ordinateur dont le fonctionnement est alors commandé par l'exécution du programme.

En conséquence, l'invention s'applique également à un programme d'ordinateur, particulièrement un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention. Le support d'informations peut être n'importe quelle entité ou dispositif capable de stocker le programme.

Par exemple, le support peut comporter un moyen de stockage, tel qu'une ROM, par exemple un CD ROM ou une ROM semi-conducteur, ou un moyen d'enregistrement magnétique, par exemple une disquette (*floppy disc*) ou un disque dur. D'autre part, le support peut être un support transmissible tel qu'un signal électrique ou optique, qui peut être acheminé via un câble électrique ou optique, ou encore par radio ou par d'autres moyens.

Lorsque le programme est incorporé dans un signal qui peut être acheminé directement par un câble ou un autre dispositif ou moyen, le support peut être constitué par un tel câble, dispositif ou moyen.

Alternativement, le support d'informations peut être un circuit intégré dans lequel le programme est incorporé, le circuit étant adapté pour exécuter ou pour être utilisé dans l'exécution du procédé en question.

L'invention s'applique également à un environnement client-serveur dans lequel tout ou partie des éléments composant un système informatique selon l'invention, sont répartis sur différents ordinateurs connectés à un réseau de communication, et communiquant entre eux selon un protocole de type client-serveur.

## Revendications

1. Procédé de traitement informatique d'un contenu audiovisuel numérique comprenant de la vidéo et des sous-titres, ledit procédé comportant une étape préalable de génération (E11), à partir du contenu audiovisuel numérique, de premières données (202) de sous-titres incluant les sous-titres et des informations de synchronisation des sous-titres avec la vidéo, ledit procédé étant **caractérisé en ce qu'**il comporte en outre les étapes suivantes :
- analyse (E12) desdites premières données de sous-titres pour déterminer une structure des sous-titres;
- génération (E13) de moyens informatiques de navigation hypermédia adaptés à ladite structure des sous-titres, lesdits moyens navigation hypermédia incluant des données de navigation interactive adaptées à permettre la relecture interactive des sous-titres, et incorporation (E14) desdits moyens de navigation au contenu audiovisuel, lesdits moyens de navigation hypermédia étant opérationnels lors de la lecture du contenu audiovisuel par un lecteur informatique adapté.

2. Procédé selon la revendication 1, **caractérisé en ce que :**
- l'étape d'analyse (E12) desdites premières données de sous-titres inclut les sous-étapes suivantes :
(A1) - détermination (E121, E122) à partir desdites premières données de sous-titres, de la structure des sous-titres selon au moins une unité prédéfinie de segmentation des sous-titres ;
(A2) - génération (E123) de données de segmentation des sous-titres incluant des informations de segmentation déterminées à l'étape (A1) et associées à des informations de synchronisation des sous-titres avec la vidéo ;
- et, l'étape de génération (E13) de moyens informatiques de navigation hypermédia inclut la sous-étape de :
(A3) - génération (E132), à partir desdites données de segmentation des sous-titres, desdites données (120) de navigation interactive dans les sous-titres, lesdites données de navigation incluant, pour chaque unité de segmentation des sous-titres, une commande, interprétable par un lecteur informatique de contenus audiovisuels adapté, l'exécution de ladite commande par ledit lecteur informatique déclenchant la relecture de l'unité de segmentation de sous-titres, en synchronisation avec la séquence vidéo correspondante.

3. Procédé selon la revendication 1 ou 2, **caractérisé en ce que :**
- l'étape d'analyse (E12) de la structure des sous-titres inclut les sous-étapes suivantes :
(B1) - analyse syntaxique et lexicale (E121) des sous-titres ;
(B2) - génération (E124) de données (110) de décomposition analytique des sous-titres, lesdites données de décomposition analytique incluant, pour chaque phrase identifiée de sous-titres, des informations de synchronisation avec la vidéo, et pour au moins une partie des mots constituant la phrase considérée, la forme lexicale de base de chaque mot ;
- et, l'étape (E13) de génération de moyens informatiques de navigation hypermédia inclut les sous-étapes suivantes :
(B3) - détermination (E131), à partir desdites données de décomposition analytique des sous-titres, pour chaque mot parmi au moins une partie des mots constituant les sous-titres, d'un lien informatique pointant sur une entrée lexicale d'un dictionnaire linguistique électronique, ladite entrée lexicale du dictionnaire étant déterminée au moins en fonction de la forme lexicale de base du mot considéré ;
(B4) - génération (E134) de troisièmes données de sous-titres (130), incluant les sous-titres, les liens informatiques déterminés à l'étape (B3), et des informations de synchronisation des sous-titres avec la vidéo ;
la lecture desdites troisièmes données par un lecteur informatique de contenus audiovisuels adapté, provoquant l'affichage des sous-titres avec possibilité de résolution de chaque lien informatique, afin de rechercher pour le mot considéré l'entrée lexicale correspondante du dictionnaire.

4. Procédé selon la revendication 3, **caractérisé en ce que,** pour un mot considéré des sous-titres, une entrée lexicale du dictionnaire est déterminée en outre en fonction de la catégorie grammaticale d'appartenance du mot.

5. Procédé selon la revendication 3 ou 4, **caractérisé en ce que** le lien informatique associé à un mot de sous-titre est une adresse Web (URL), une commande informatique relative à un mot affiché sur un écran d'ordinateur et exécutée par un utilisateur dudit lecteur informatique, par exemple via un dispositif informatique de pointage, provoquant la lecture de ladite adresse Web par un navigateur Web.

6. Procédé selon l'une quelconque des revendications 3 à 5, la revendication 3 étant combinée avec la revendication 2, **caractérisé en ce que** lesdites données de segmentation des sous-titres sont incluses dans lesdites données (110) de décomposition analytique des sous-titres.

7. Procédé selon l'une quelconque des revendications 3 à 6,
**caractérisé en ce que :**
- l'étape préalable de génération de premières données de sous-titres inclut la génération de données vidéo sans sous-titres (201), lesdites données vidéo sans sous-titres étant encodées dans un format prédéterminé de lecture vidéo en flux continu, par exemple le format RealMedia™, et stockées dans un premier fichier informatique (100) ;
- lesdites troisièmes données de sous-titres sont encodées dans un format prédéterminé de lecture de sous-titres en flux continu, par exemple le format RealText™, et stockées dans un second fichier informatique (130) ;
la lecture des premier et second fichiers par un lecteur informatique de contenus audiovisuels en flux continu, par exemple le lecteur RealPlayer™, provoquant l'affichage synchronisé de la vidéo et des sous-titres.

8. Procédé selon la revendication 7, **caractérisé en ce que** lesdites données de navigation dans les sous-titres sont stockées dans un troisième fichier informatique (120) dans lequel elles sont exprimées dans un langage de balisage de type SMIL, lesdites données de navigation incluant en outre une référence informatique auxdits premier et second fichiers informatiques (100, 130) ; la lecture dudit troisième fichier par un lecteur informatique de contenus audiovisuels en flux continu, par exemple le lecteur RealPlayer™ provoquant l'affichage synchronisé de la vidéo et des sous-titres.

9. Procédé selon l'une quelconque des revendications 2 à 8, **caractérisé en ce que** ladite au moins une unité prédéfinie de segmentation des sous-titres est constituée d'une ligne d'affichage des sous-titres, et/ou d'une phrase de sous-titres, et/ou d'un paragraphe de sous-titres.

10. Système informatique, par exemple un micro-ordinateur (40), **caractérisé en ce qu'**il comporte des moyens informatiques (1) pour mettre en oeuvre un procédé de traitement d'un contenu audiovisuel tel que revendiqué dans l'une quelconque des revendications 1 à 9.

11. Système informatique selon la revendication 10, **caractérisé en ce qu'**il comporte :
- un module (10) de séparation vidéo / sous-titres, pour générer des premières données (202) de sous-titres incluant les sous-titres et des informations de synchronisation des sous-titres avec la vidéo ;
- un module (12) d'analyse des sous-titres, pour déterminer la structure des sous-titres à partir desdites premières données (202) de sous-titres ; et
- un module (14, 16) de génération de moyens de navigation hypermédia, pour générer des moyens de navigation hypermédia adaptés à la structure des sous-titres, et incorporer lesdits moyens de navigation hypermédia au contenu audiovisuel.

12. Système informatique selon la revendication 11, **caractérisé en ce que** ledit module (14, 16) de génération de moyens de navigation hypermédia, inclut un module (14) de génération de liens vers un dictionnaire, pour générer des liens informatiques entre au moins une partie des mots constituant les sous-titres et des entrées lexicales d'un dictionnaire linguistique électronique.

13. Système informatique selon la revendication 11 ou 12, **caractérisé en ce que** ledit module (14, 16) de génération de moyens de navigation hypermédia, inclut un module (16) de génération de moyens de navigation interactive dans les sous-titres.

14. Système informatique selon l'une quelconque des revendications 11 à 13, **caractérisé en ce que** les différents modules (10, 12, 14, 16) composant lesdits moyens informatiques (1), sont répartis sur différents ordinateurs reliés à un réseau de communication, par exemple l'Internet.

15. Programme d'ordinateur sur un support d'informations, ledit programme comportant des instructions de programme adaptées à la mise en oeuvre d'un procédé selon l'une quelconque des revendications 1 à 9, lorsque ledit programme est chargé et exécuté dans un ordinateur.

## Claims

1. Data processing method for digital audiovisual content comprising video and subtitles, said method comprising a preliminary step (E11) of generating, from the digital audiovisual content, first subtitle data (202) including the subtitles and information for synchronizing subtitles with the video, said method being **characterized in that** it furthermore comprises the following steps:
- analyzing (E12) said first subtitle data in order to determine a subtitle structure;
- generating (E13) computerized hypermedia navigation means suited to said subtitle structure, said hypermedia navigation means including interactive navigation data designed to allow the interactive re-reading of subtitles, and incorporating (E14) said navigation means into the audiovisual content, said hypermedia navigation means being operational during the reading of the audiovisual content by a suitable computer reader.

2. Method according to Claim 1, **characterized in that:**
- the step of analyzing (E12) said first subtitle data includes the following substeps:
(A1) - determination (E121, E122) from said first subtitle data of the structure of the subtitles according to at least one predefined unit for segmenting subtitles;
(A2) - generation (E123) of segmentation data for the subtitles including segmentation information determined in the step (A1) and associated with information for synchronizing subtitles with the video;
- and the step of generating (E13) computerized hypermedia navigation means includes the substep of:
(A3) - generating (E132), from said subtitle segmentation data, said data (120) for interactive navigation in the subtitles, said navigation data including, for each subtitle segmentation unit, a command that can be interpreted by a suitable computer reader of audiovisual content, the execution of said command by said computer reader triggering the re-reading of the subtitle segmentation unit in synchronization with the corresponding video sequence.

3. Method according to Claim 1 or 2, **characterized in that:**
- the step of analyzing (E12) the subtitle structure includes the following substeps:
(B1) - syntactic and lexical analysis (E121) of the subtitles;
(B2) - generation (E124) of data (110) for analytically breaking down subtitles, said analytic break-down data including, for each identified phrase of the subtitles, information for synchronization with the video, and, for at least part of the words constituting the phrase considered, the basic lexical form of each word;
- and the step (E13) of generating computerized hypermedia navigation means includes the following substeps:
(B3) - determination (E131) from said analytic break-down data for the subtitles, for each word among at least part of the words constituting the subtitles, a computer link pointing to a lexical entry of an electronic language dictionary, said lexical entry of the dictionary being determined depending at least on the basic lexical form of the word considered;
(B4) - generation (E134) of third subtitle data (130) including the subtitles, the computer links determined in step (B3), and information for synchronizing the subtitles with the video;
the reading of said third data by a suitable computer reader of audiovisual content causing the display of subtitles with the possibility of resolving each computer link in order to search for the corresponding lexical entry of the dictionary for the word considered.

4. Method according to Claim 3, **characterized in that** for a considered word of the subtitles a lexical entry of the dictionary is furthermore determined depending on the grammatical category the word belongs to.

5. Method according to Claim 3 or 4, **characterized in that** the computer link associated with a word of the subtitle is a web address (URL), a computer command relating to a word displayed on a computer screen and executed by a user of said computer reader, for example via a computer pointing device, causing said web address to be read by a web browser.

6. Method according to any one of Claims 3 to 5, Claim 3 being combined with Claim 2, **characterized in that** said subtitle segmentation data are included in said analytic break-down data (110) for the subtitles.

7. Method according to any one of Claims 3 to 6,
**characterized in that:**
- the preliminary step of generating first subtitle data includes the generation of video data without subtitles (201), said video data without subtitles being encoded in a predetermined video streaming format, for example RealMedia^{™} format, and stored in a first computer file (100);
- said third subtitle data are encoded in a predetermined subtitle streaming format, for example the RealText^{™} format, and stored in a second computer file (130);
the reading of the first and second files by a computer reader of streamed audiovisual content, for example the RealPlayer^{™} reader, causing the synchronized display of the video and of the subtitles.

8. Method according to Claim 7, **characterized in that** said data for navigation in the subtitles are stored in a third computer file (120) in which they are expressed in an SMIL mark-up language, said navigation data furthermore including a computer reference to said first and second computer files (100, 130); the reading of said third file by a computer reader of streamed audiovisual content, for example the RealPlayer^{™} reader, causing the synchronized display of the video and of the subtitles.

9. Method according to any one of Claims 2 to 8, **characterized in that** said at least one predefined subtitle segmentation unit consists of a subtitle display line, and/or of a subtitle phrase, and/or of a paragraph of subtitles.

10. Data processing system, for example a microcomputer (40), **characterized in that** it comprises data processing means (1) for implementing a method for processing audiovisual content such as claimed in any one of Claims 1 to 9.

11. Data processing system according to Claim 10,
**characterized in that** it comprises:
- a video/subtitles separation module (10) for generating first subtitle data (202) including the subtitles and information for synchronizing subtitles with the video;
- a subtitle analysis module (12) for determining the structure of subtitles from said first subtitle data (202); and
- a hypermedia navigation means generation module (14, 16) for generating the hypermedia navigation means suited to the structure of the subtitles and incorporating said hypermedia navigation means into the audiovisual content.

12. Data processing system according to Claim 11, **characterized in that** said hypermedia navigation means generation module (14, 16) includes a module (14) for generating links to a dictionary for generating computer links between at least part of the words constituting the subtitles and lexical entries of an electronic language dictionary.

13. Data processing system according to Claim 11 or 12, **characterized in that** said hypermedia navigation means generation module (14, 16) includes a module (16) for generating interactive navigation means in the subtitles.

14. Data processing system according to any one of Claims 11 to 13, **characterized in that** the various modules (10, 12, 14, 16) comprising said data processing means (1) are distributed over different computers connected to a communications network, for example the Internet.

15. Computer program on a data medium, said program comprising program instructions designed to implement a method according to any one of Claims 1 to 9 when said program is loaded into and executed on a computer.

## Patentansprüche

1. Verfahren zur elektronischen Datenverarbeitung eines digitalen audiovisuellen Inhalts, der Video und Untertitel enthält, wobei das Verfahren einen vorhergehenden Schritt der Erzeugung (E11), ausgehend vom digitalen audiovisuellen Inhalt, erster Untertitel-Daten (202) aufweist, die die Untertitel und Informationen zur Synchronisation der Untertitel mit dem Video umfassen, wobei das Verfahren **dadurch gekennzeichnet ist, dass** es außerdem die folgenden Schritte aufweist:
- Analyse (E12) der ersten Untertitel-Daten, um eine Struktur der Untertitel zu bestimmen;
- Erzeugung (E13) von EDV-Mitteln zur Hypermedia-Navigation, die für die Struktur der Untertitel geeignet sind, wobei die Hypermedia-Navigationsmittel Daten zur interaktiven Navigation umfassen, die geeignet sind, um das nochmalige interaktive Lesen der Untertitel zu erlauben, und Einfügen (E14) der Navigationsmittel in den audiovisuellen Inhalt,
wobei die Hypermedia-Navigationsmittel beim Lesen des audiovisuellen Inhalts durch ein geeignetes EDV-Lesegerät betriebsbereit sind.

2. Verfahren nach Anspruch 1, **dadurch gekennzeichnet,**
**dass:**
- der Schritt der Analyse (E12) der ersten Untertitel-Daten die folgenden Teilschritte umfasst:
(A1) - Bestimmung (E121, E122), ausgehend von den ersten Untertitel-Daten, der Struktur der Untertitel gemäß mindestens einer vorab definierten Einheit zur Segmentierung der Untertitel;
(A2) - Erzeugung (E123) von Daten zur Segmentierung der Untertitel, die Segmentierungsinformationen umfassen, die im Schritt (A1) bestimmt werden und Informationen zur Synchronisation der Untertitel mit dem Video zugeordnet sind;
- und der Schritt der Erzeugung (E13) von EDV-Mitteln zur Hypermedia-Navigation den Teilschritt umfasst:
(A3) - Erzeugung (E132), ausgehend von den Daten zur Segmentierung der Untertitel, der Daten (120) zur interaktiven Navigation in den Untertiteln, wobei die Navigationsdaten für jede Einheit zur Segmentierung der Untertitel einen Befehl umfassen, der von einem geeigneten EDV-Lesegerät audiovisueller Inhalte interpretiert werden kann, wobei die Ausführung des Befehls durch das EDV-Lesegerät das nochmalige Lesen der Einheit zur Segmentierung von Untertiteln synchron mit der entsprechenden Videosequenz auslöst.

3. Verfahren nach Anspruch 1 oder 2, **dadurch gekennzeichnet, dass:**
- der Schritt der Analyse (E12) der Struktur der Untertitel die folgenden Teilschritte umfasst:
(B1) - syntaktische und lexikalische und Analyse (E121) der Untertitel;
(B2) - Erzeugung (E124) von Daten (110) zur analytischen Zerlegung der Untertitel,
wobei die Daten zur analytischen Zerlegung für jeden identifizierten Satz von Untertiteln Informationen zur Synchronisation mit dem Video, und für mindestens einen Teil der Wörter, die den betrachteten Satz bilden, die lexikalische Basisform jedes Worts umfassen;
- und der Schritt (E13) der Erzeugung von EDV-Mitteln zur Hypermedia-Navigation die folgenden Teilschritte umfasst:
(B3) - Bestimmung (E131), ausgehend von den Daten zur analytischen Zerlegung der Untertitel, für jedes Wort von mindestens einem Teil der die Untertitel bildenden Wörter, eines EDV-Links, das auf eine lexikalische Eintragung eines elektronischen linguistischen Wörterbuchs zeigt, wobei die lexikalische Eintragung des Wörterbuchs zumindest in Abhängigkeit von der lexikalischen Basisform des betrachteten Worts bestimmt wird;
(B4) - Erzeugung (E134) von dritten Untertitel-Daten (130), die die Untertitel, die im Schritt (B3) bestimmten EDV-Links und Informationen zur Synchronisation der Untertitel mit dem Video umfassen;
wobei das Lesen der dritten Daten durch ein geeignetes EDV-Lesegerät audiovisueller Inhalte die Anzeige der Untertitel mit der Möglichkeit der Auflösung jedes EDV-Links bewirkt, um für das betrachtete Wort die entsprechende lexikalische Eintragung des Wörterbuchs zu suchen.

4. Verfahren nach Anspruch 3, **dadurch gekennzeichnet, dass,** für ein betrachtetes Wort der Untertitel, eine lexikalische Eintragung des Wörterbuchs außerdem in Abhängigkeit von der grammatikalischen Kategorie der Zugehörigkeit des Worts bestimmt wird.

5. Verfahren nach Anspruch 3 oder 4, **dadurch gekennzeichnet, dass** das einem Untertitel-Wort zugeordnete EDV-Link eine Web-Adresse (URL) ist,
wobei eine EDV-Steuerung bezüglich eines auf einem Computerbildschirm angezeigten Worts, die von einem Benutzer des EDV-Lesegeräts zum Beispiel mittels einer EDV-Anzielvorrichtung ausgeführt wird, das Lesen der Web-Adresse durch einen Web-Browser bewirkt.

6. Verfahren nach einem der Ansprüche 3 bis 5, wobei Anspruch 3 mit Anspruch 2 kombiniert ist, **dadurch gekennzeichnet, dass** die Daten zur Segmentierung der Untertitel in den Daten (110) zur analytischen Zerlegung der Untertitel enthalten sind.

7. Verfahren nach einem der Ansprüche 3 bis 6,
**dadurch gekennzeichnet, dass:**
- der vorhergehende Schritt der Erzeugung erster Untertitel-Daten die Erzeugung von Videodaten ohne Untertitel (201) umfasst, wobei die Videodaten ohne Untertitel in einem vorbestimmten Format des Video-Lesens in kontinuierlichem Strom codiert sind, zum Beispiel dem Format RealMedia^{™}, und in einer ersten EDV-Datei (100) gespeichert sind;
- die dritten Untertitel-Daten in einem vorbestimmten Format des Lesens von Untertiteln in kontinuierlichem Strom codiert sind, zum Beispiel dem Format RealText^{™}, und in einer zweiten EDV-Datei (130) gespeichert sind;
wobei das Lesen der ersten und zweiten Dateien durch ein EDV-Lesegerät audiovisueller Inhalte in kontinuierlichem Strom, zum Beispiel dem Lesegerät RealPlayer^{™}, die synchronisierte Anzeige des Videos und der Untertitel bewirkt.

8. Verfahren nach Anspruch 7, **dadurch gekennzeichnet, dass** die Navigationsdaten in den Untertiteln in einer dritten EDV-Datei (120) gespeichert sind, in der sie in einer Markierungssprache des Typs SMIL ausgedrückt sind, wobei die Navigationsdaten außerdem einen EDV-Bezug auf die erste und die zweite EDV-Datei (100, 130) umfassen; wobei das Lesen der dritten Datei durch ein EDV-Lesegerät audiovisueller Inhalte in kontinuierlichem Strom, zum Beispiel das Lesegerät RealPlayer^{™}, die synchronisierte Anzeige des Videos und der Untertitel bewirkt.

9. Verfahren nach einem der Ansprüche 2 bis 8, **dadurch gekennzeichnet, dass** die mindestens eine vordefinierte Einheit zur Segmentierung der Untertitel aus einer Anzeigezeile der Untertitel und/oder aus einem Satz von Untertiteln, und/oder aus einem Absatz von Untertiteln besteht.

10. Datenverarbeitungssystem, zum Beispiel ein Mikrocomputer (40), **dadurch gekennzeichnet, dass** es Datenverarbeitungsmittel (1) aufweist, um ein Verfahren zur Verarbeitung eines audiovisuellen Inhalts durchzuführen, wie es in einem der Ansprüche 1 bis 9 beansprucht wird.

11. Datenverarbeitungssystem nach Anspruch 10, **dadurch gekennzeichnet, dass** es aufweist:
- ein Modul (10) der Trennung Video / Untertitel, um erste Untertitel-Daten (202) zu erzeugen, die die Untertitel und Informationen zur Synchronisation der Untertitel mit dem Video umfassen;
- ein Modul (12) zur Analyse der Untertitel, um die Struktur der Untertitel ausgehend von den ersten Untertitel-Daten (202) zu bestimmen; und
- ein Modul (14, 16) zur Erzeugung von Hypermedia-Navigationsmitteln, um Hypermedia-Navigationsmittel zu erzeugen, die für die Struktur der Untertitel geeignet sind, und die Hypermedia-Navigationsmittel in den audiovisuellen Inhalt einzufügen.

12. Datenverarbeitungssystem nach Anspruch 11, **dadurch gekennzeichnet, dass** das Modul (14, 16) zur Erzeugung von Hypermedia-Navigationsmitteln ein Modul (14) zur Erzeugung von Links zu einem Wörterbuch umfasst, um EDV-Links zwischen mindestens einem Teil der die Untertitel bildenden Wörter und lexikalischen Eintragungen eines elektronischen linguistischen Wörterbuchs zu erzeugen.

13. Datenverarbeitungssystem nach Anspruch 11 oder 12, **dadurch gekennzeichnet, dass** das Modul (14, 16) zur Erzeugung von Hypermedia-Navigationsmitteln ein Modul (16) zur Erzeugung von Mitteln interaktiver Navigation in den Untertiteln umfasst.

14. Datenverarbeitungssystem nach einem der Ansprüche 11 bis 13, **dadurch gekennzeichnet, dass** die verschiedenen die Datenverarbeitungsmittel (1) bildenden Module (10, 12, 14, 16) auf verschiedene Computer verteilt sind, die mit einem Kommunikationsnetz, zum Beispiel dem Internet, verbunden sind.

15. Computerprogramm auf einem Informationsträger, wobei das Programm Programmanweisungen aufweist, die für die Durchführung eines Verfahrens nach einem der Ansprüche 1 bis 9 geeignet sind, wenn das Programm in einen Computer geladen und ausgeführt wird.
